# EUROPÄISCHE PATENTSCHRIFT

(11) **EP 1 705 066 B1**
(45) Veröffentlichungstag und Bekanntmachung des Hinweises auf die Patenterteilung: **25.02.2009**
(21) Anmeldenummer: 06005004.4
(22) Anmeldetag: 11.03.2006
(51) Int. Cl.: B60R 9/04, F16B 5/02, F16B 39/36

(54) **Befestigungsvorrichtung**
Attachment device
Dispositif de fixation

(30) Priorität: 21.03.2005 DE 102005013451
(43) Veröffentlichungstag der Anmeldung: 27.09.2006
(73) Patentinhaber: Advanced Accessory Systems GmbH, 69207 Sandhausen (DE)
(72) Erfinder: Pöter, Olaf, 69168 Wiesloch (DE)
(74) Vertreter: Weber, Walter

(56) Entgegenhaltungen:
- EP-A- 0 950 569
- DE-U1- 20 019 533
- DE-U1- 29 620 770
- DE-U1- 29 804 777
- DE-U1-9202004 018 07

## Beschreibung

Die Erfindung betrifft eine Befestigungsvorrichtung bestehend aus Befestigungsmittel und Höhenausgleichselement sowie einem auf einem Deckblech angeordneten Haltefuß mit einer Abstützung auf einer unter dem Deckblech liegenden Tragstruktur, insbesondere für die Befestigung eines Relingfußes auf einem Kraftfahrzeugdach, wobei mittels des Höhenausgleichselements Abstandstoleranzen zwischen Deckblech und Tragstruktur berücksichtigbar sind und das Befestigungsmittel derart ausgebildet ist, daß eine feste Verbindung mit der Tragstruktur erzielbar ist, wobei das Befestigungsmittel ein Bolzen und das Höhenausgleichselement ein im Haltefuß gelagertes teleskopartig ausziehbares Teil mit einer Anschlagsfläche ist, wobei der Bolzen durch Anziehen einer Mutter das ausziehbare Teil mit seiner Anschlagfläche gegen die Tragstruktur zieht und nach deren Auftreffen mittels einer keilartigen Klemmvorrichtung das ausziehbare Teil im Haltefuß verklemmt, so daß das weitere Anziehen der Mutter eine Befestigung an der Tragstruktur bewirkt.

Da ein Deckblech, wie beispielsweise ein Autodach, zu dünn ist, um die erforderliche Stabilität aufzuweisen, wird darunter eine Tragstruktur, auch Dachrahmen, Dachflansch oder Spriegel genannt, angeordnet. Diese Tragstruktur weist einen Abstand zum Deckblech auf, wobei Verbindungselemente der Tragfunktion dienen. Haltefüße der genannten Art dienen in der Regel dazu, entweder direkt oder über eine Reling Gepäckträgerkonstruktionen aufzunehmen. Diese Haltefüße müssen deshalb nicht nur das mögliche Gewicht aufnehmen, sondern auch noch bei Unfällen möglichst sicher halten. Daher müssen solche Haltefüße zwar auf dem Deckblech angeordnet, jedoch sicher mit der Tragstruktur verbunden sein. Bezüglich des Abstandes zwischen dem äußeren Deckblech und der Tagstruktur ist im Kfz-Bereich eine Toleranz von +/- 1,5mm, teilweise auch mehr vorgesehen. Darum sind Konstruktionen erforderlich, die eine sichere Verankerung an der Tragstruktur, aber auch eine - zur Verhinderung einer Deformation des Dachblechs - begrenzte Anpreßkraft auf dem Deckblech garantieren, wozu die genannte Toleranz ausgeglichen werden muß.

Zur Lösung dieses Problems wurden verschiedene Lösungen vorgeschlagen. Beispielsweise sieht die DE 31 21 086 C2 eine Anordnung einer Gewindebuchse an der Tragstruktur vor, in die ein Befestigungsbolzen für den Haltefuß mittels einer Einstellehre eingeschraubt wird. Die DE 35 24 558 C2 sieht eine ähnliche, jedoch leichter handhabbare Konstruktion vor. Schließlich ist aus der DE 197 06 611 C1 eine Befestigungsvorrichtung bekannt, bei der ein am Haltefuß angeordneter Befestigungsbolzen von Hand auf das Deckblech gedrückt wird und damit der Befestigungsbolzen seine höhenmäßige Position zu einem Höhenausgleichselement erhält, das auf der Tragstruktur steht. Danach wird der Befestigungsbolzen im Höhenausgleichselement verklemmt und dieses unter Aufspreizung von Montagefüßen so lange an der Tragstruktur festgezogen, bis kürzere Stützfüße auf derselben auftreffen. Die Montage ist somit nicht ganz einfach, da während eines Schraubvorganges zum Verklemmen des Befestigungsbolzens im Höhenausgleichselement der Haltefuß mit möglichst gleichbleibender Handkraft auf das Deckblech gedrückt werden muß. Dabei beeinflußt auch die Stärke der Handkraft die endgültige Anpreßkraft des Haltefußes auf dem Deckblech.

Die DE 296 20 770 U1 offenbart zwar ein Verbindungselement mit einer vom Drehmoment des Schraubenfestziehens unabhängigen Anpreßkraft, diese wirkt jedoch zwischen dem Verbindungselement und unmittelbar aufeinanderliegenden Blechen. Eine Anregung, wie eine Befestigungsvorrichtung zwischen einer Tragstruktur und einem zu dieser beabstandeten Deckblech angeordnet werden könnte, ist dieser Schrift ebensowenig zu entnehmen, wie eine Lehre dahingehend, wie zwei einer Befestigung dienende, beabstandete Bleche mit unterschiedlichen Anpreßkräften beaufschlagt werden können.

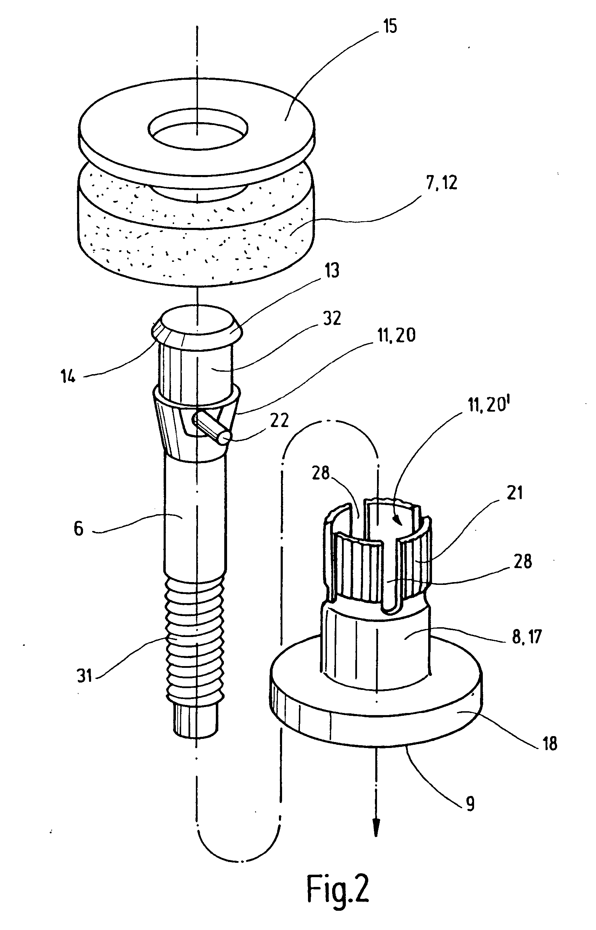

Die DE 20 2004 018 079 U1 lehrt die Anordnung einer Befestigungsvorrichtung, bei der ein Abstandshaltersystem zwischen einer Tragstruktur als unteres Blech und einem Deckblech der Fahrzeugkarosserie angeordnet wird. Aus der Fig. 2 ist ersichtlich, daß das Abstandshaltersystem mit dem Deckblech verbunden und mit der Tragstruktur verschraubt ist. Der Haltefuß der Dachleiste wird jedoch von einem Überstand des Abstandshaltersystems über das Deckblech getragen, wobei sich zwischen Haltefuß und Fahrzeugkarosserie eine Schattenfuge ergibt. Auf diese Weise gibt es überhaupt kein Aufliegen des Haltefußes auf dem Deckblech der Fahrzeugkarosserie. Wie das Abstandshaltersystem Toleranzen zwischen Deckblech und Tragstruktur ausgleicht und ob auch eine Kraftbeaufschlagung zur Befestigung im Bereich des Deckblechs erzielbar ist und gegebenenfalls wie oder ob dort vielleicht nur eine Nut und Feder - Aufnahme vorgesehen ist, ist weder der Zeichnung noch der Beschreibung oder dem dort aufgeführten Verweis eindeutig zu entnehmen. Damit wird auch nicht gelehrt, wie eine ausreichende Tragfunktion unter Vermeidung einer Deformation des Dachblechs durch eine definierte Anpreßkraft des Haltefußes erzielt werden kann.

Die DE 200 19 533 U1 lehrt eine Befestigungsvorrichtung , welche mittels eins Ankers in ein Langloch der Tragstruktur eingefügt und dann eine Höhenausgleichsvorrichtung auf den Abstand zwischen Tragstruktur und Dachaußenhaut eingestellt wird, indem konische Körper im Relingfuß verkeilt werden. Hier ist jedoch die Anpreßkraft mit Hilfe der Befestigungsvorrichtung nicht erzielbar, sie muß durch einen entsprechenden Druck auf den Relingfuß beim Festziehen der Höhenausgleichsvorrichtung aufgebracht werden. Außerdem hat diese Befestigungsvorrichtung den Nachteil, daß von oben zugängliche Schrauben erforderlich sind, welche dann unter Deckeln verborgen werden müssen.

Aus der EP 0 950 569 A1 und der DE 298 04 777 U1 sind Vorrichtungen der eingangs genannten Art bekannt, bei denen jedoch die Klemmvorrichtung in ein Sackloch des Haltefußes eingefügt wird. Damit die Klemmvorrichtung in dem Sackloch verankert wird, ist es zunächst erforderlich, die Mutter anzuziehen, um durch das Auftreffen der Anschlagfläche eines Flansches auf der von einem Dachrahmen gebildeten Tragstruktur eine Verkeilung der Klemmvorrichtung in dem Sackloch zu bewirken. Erst wenn die Klemmvorrichtung in dem Sackloch Halt gefunden hat, kann die Mutter den Haltefuß an dem Dachrahmen verankern. Da jedoch der Flansch Teil der Spreizhülse ist, kann sich diese nach dem Auftreffen der Anschlagfläche auf dem Dachrahmen durch weiteres Anziehen der Mutter nicht mehr nach unten bewegen. Dies führt dazu, daß keine Anpreßkraft des Haltefußcs auf das Deckblech mittels dieser Befestigungsvorrichtung erzielbar ist. Um eine solche Anpreßkraft zu erhalten, ist es daher auch bei dieser Vorrichtung notwendig, daß der Haltefuß beim Anziehen der Mutter von oben mit der entsprechenden Kraft beaufschlagt wird. Dies ist jedoch keine einfache Montage mehr, da diese Kraft entweder manuell aufgebracht werden muß, dann kann sie allerdings sehr unterschiedlich ausfallen, oder es ist der Einsatz einer Vorrichtung zur Kraftbeaufschlagung erforderlich. Außer dieser nicht ganz einfachen Montage ist auch die Verankerung des Relingfußes nicht völlig sicher. Treten hohe Kräfte nach oben auf, so ist es möglich, daß sich die Befestigungsvorrichtung löst, da sie ausschließlich durch die Klemmwirkung der Hülse in dem Sackloch und damit in dem Haltefuß hält. Ein solches Lösen ist bei schweren Lasten und unbefestigten oder schlechten Straßen wegen der dadurch entstehenden dynamischen Dauerbelastung möglich oder bei Unfällen, wenn diese infolge einer schweren Last zu einer großen ruckartigen Kraftbeaufschlagung nach oben führen.

Der Erfindung liegt daher die Aufgabe zugrunde, eine Befestigungsvorrichtung der eingangs genannten Art derart auszugestalten, daß bei einfacher Montage eine sichere Verankerung an der Tragstruktur und eine definierte Anpreßkraft des Haltefußes auf dem Deckblech erzielbar ist.

Die Aufgabe wird erfindungsgemäß dadurch gelöst, daß zwischen einem Haltekopf mit einem Halterand am Ende des Bolzens und einer Auflagefläche am Haltefuß ein Federelement angeordnet ist, das durch das Anziehen der Mutter bis zur Verklemmung des ausziehbaren Teils im Haltefuß vorgespannt wird, um den Haltefuß mit begrenzter Anpreßkraft gegen das Deckblech zu drücken, wobei das Federelement eine Dicke aufweist, die über dem maximal möglichen Gesamtkompressionsweg des Federelements liegt und sich dieser Gesamtkompressionsweg aus dem Weg zusammensetzt, den das teleskopartig ausziehbare Teil vor dem Auftreffen der Anschlagfläche zurücklegen muß, zusammen mit dem Weg vom Auftreffen der Anschlagfläche bis die Klemmvorrichtung Halt findet, wobei das Federelement und der Gesamtkompressionsweg so ausgelegt sind, daß durch das Anziehen der Mutter das Federelement ein begrenzte Anpreßkraft des Haltefußes auf dem Deckblech ausübt, die innerhalb einer vorgegebenen Toleranz liegt, durch die das Deckblech nicht verformt wird.

Die Erfindung hat den Vorteil, daß der bzw. die Haltefüße, beispielsweise mit einer Dachreling, nur auf das Dach aufgelegt werden müssen, wobei die Bolzen der Haltefüße bzw. des Haltefußes durch Öffnungen des Deckblechs hindurch in eine Bohrung in der Tragstruktur eingefügt sind bzw. ist. Ohne daß eine Handkraft erforderlich ist, brauchen jetzt nur die Muttern am unteren Ende der Bolzen aufgeschraubt und angezogen werden. Dabei wird der Haltefuß auf das Deckblech gezogen bis die Anschlagfläche des teleskopartig ausziehbaren Teils auf der Tragstruktur auftrifft und die keilartige Klemmvorrichtung das teleskopartig ausziehbare Teil im Haltefuß verklemmt hat. Mit dieser Verklemmung ist das Höhenausgleichselement bezüglich der Höhe entsprechend dem jeweiligen Abstand zwischen Deckblech und Tragstruktur eingestellt. Dabei ist eine definierte Anpreßkraft des Haltefußes auf dem Deckblech erzielt.

Diese definierte Anpreßkraft wird dadurch erzielt, daß das Federelement zunächst durch das Anziehen der Mutter bis zum Auftreffen der Anschlagfläche auf der Tragstruktur komprimiert wird. Diese Komprimierung ist von der eingangs genannten Toleranz des Abstands zwischen Deckblech und Tragstruktur insofern abhängig, als die Abweichung vom Mindestmaß den Abstand der Anschlagfläche von der Tragstruktur bestimmt. Danach erfolgt eine weitere Komprimierung des Federelements bis zur Verklemmung der keilartigen Klemmvorrichtung im Haltefuß. Diese weitere Komprimierung ist ausschließlich durch die Ausgestaltung der Klemmvorrichtung bestimmt. Sie ist daher konstruktiv festlegbar und dient dazu, daß eine Mindestanpreßkraft unabhängig von der Abweichung vom Mindestmaß des Abstandes zwischen Deckblech und Tragstruktur erzielbar ist. Die Mindestanpreßkraft garantiert, daß eine saubere und im Zusammenwirken mit einer möglichen Dichtung auch wasserdichte Anlage am Deckblech erzielt ist. Mittels des Federelements entfaltet die Anpreßkraft ihre Dauerwirkung.

Die Anpreßkraft kann durch die Ausgestaltung von Federelement und Klemmvorrichtung vorbestimmt werden. Dies sind einerseits die Beschaffenheit des Federelements hinsichtlich des Federwegs und der Federkennlinie, andererseits der mögliche Kompressionsweg. Dieser setzt sich zusammen aus dem Weg, den das teleskopartig ausziehbare Teil vor dem Auftreffen der Anschlagfläche zurücklegen muß und dem Weg vom Auftreffen der Anschlagfläche bis die Klemmvorrichtung Halt findet. Das letztgenannte Wegstück ist durch die Ausgestaltung der Klemmvorrichtung festlegbar. Das erste Wegstück ist im Rahmen des jeweiligen Maßes innerhalb der Grenzen der Toleranz variabel. Die mögliche Kompression infolge des festgelegten und infolge des innerhalb eines gewissen Bereichs variablen Wegstücks muß dabei derart limitiert sein, daß jegliche Deformation des Deckblechs mit Sicherheit ausgeschlossen werden kann. Das festgelegte Wegstück muß jedoch die Mindestanpreßkraft garantieren.

Ist die Klemmung erfolgt, so dient ein weiteres Anziehen der Mutter nur noch der Verankerung des Bolzens an der Tragstruktur, indem diese zwischen Mutter und Anschlagfläche mit hoher Kraft geklemmt wird. Dieses weitere Anziehen der Mutter kann dann die Anpreßkraft des Haltefußes auf dem Deckblech nicht mehr beeinflussen, so daß jegliche Deformation des Deckblechs mit Sicherheit angeschlossen werden kann.

Als Federelement kann ein Gummiring oder ein elastischer Kunststoff dienen. Dabei kann es sich bei dem Gummiring beispielsweise um einen Ring aus Poron-Schaumgummi handeln. Bezüglich der Materialbeschaffenheit läßt sich die Federkennlinie durch Variation der Dicke und der Shore-Härte fein anpassen. Der Weg zwischen dem Auftreffen der Anschlagfläche auf der Tragstruktur und dem Eintritt der Klemmwirkung kann durch die Keilwinkel der keilartigen Klemmvorrichtung vorbestimmt werden. Dieser Weg bestimmt den minimalen Kompressionsweg für den Fall, daß der Abstand zwischen Deckblech und Tragstruktur an der unteren Toleranzschwelle liegt.

Durch die Erfindung wird der Haltefuß besonders stabil an der Tragstruktur verankert, da die Kräfte nicht nur wie bei der Befestigungsvorrichtung der EP 0 950 569 A1 von der Klemmvorrichtung aufgenommen werden. Vielmehr kommt zu dieser Klemmkraft die Kraft hinzu, welche über Haltekopf und Federelement aufgebracht werden. Der Haltekopf kann dabei alle Kräfte bis zur Grenze des Abrisses aufnehmen. Je nach Ausgestaltung können diese sehr hoch sein. Im Gegensatz zu der Klemmkraft, die ausschließlich von einer Klemmvorrichtung aufgebracht wird, ist der Haltekopf mit dem Federelement auch gegenüber dynamischer Dauerbelastung resistenter, da dieser einem langsamen Heranziehen eine wegabhängig ansteigende Kraftkomponente und schließlich einen Anschlag entgegensetzt.

Das teleskopartig ausziehbare Teil ist vorzugsweise eine Buchse mit einem die Anschlagfläche bildenden Bund. Zur Vereinfachung der Montage kann vorgesehen sein, daß ein elastischer Haltering auf dem Bolzen angeordnet ist, um die Buchse an der Seite des Bundes für die Montage unverlierbar auf dem Bolzen zu halten. Damit ist es noch wesentlich einfacher, die Befestigungsvorrichtung in die vorgesehenen Öffnungen einzusetzen.

Die keilartige Klemmvorrichtung kann auf unterschiedliche Weise ausgestaltet werden. Wesentlich ist dabei, daß das ausziehbare Teil im Haltefuß verklemmbar ist. Vorzugsweise wird die keilartige Klemmvorrichtung derart ausgebildet, daß ein konusartiger Abschnitt am Bolzen und ein korrespondierender Abschnitt an der Buchse vorgesehen sind. Durch deren Keilwirkung sind Bolzen und Buchse in der Bohrung des Haltefußes festlegbar, da sich die Buchse durch die Keilwirkung aufweitet. Dazu ist entweder das Material der Buchse so gewählt, daß sie sich aufweiten läßt oder es wird der korrespondierende Abschnitt der Buchse mit mindestens einem Schlitz für eine Aufspreizung der Buchse ausgestattet, damit sich diese leicht in dem Haltefuß verklemmen kann. Ein noch besserer Halt wird dadurch erzielt, daß die Buchse im Umfangsbereich ihrer Aufspreizung und/oder der korrespondierende Abschnitt der Bohrung des Haltefußes eine haltgebende Oberflächenstruktur, wie beispielsweise eine Rändelung, aufweist.

Zweckmäßigerweise weist der Bolzen gegenüber dem Haltefuß eine Verdrehsicherung auf. Die Verdrehsicherung kann beispielsweise ein am Bolzen angeordneter Stift oder Nase sein, der/die durch den Schlitz der Buchse hindurchgreifend in eine Nut der Bohrung des Haltefußes eingreift. Als Verdrehsicherung kann natürlich jede Abweichung von der Rundheit von Bolzen, Buchse, beziehungsweise Bohrung des Haltefußes dienen. Die Verdrehsicherung hat den Zweck, daß beim Anziehen der Mutter sich der Bolzen nicht drehen kann.

Eine weitere vorteilhafte Ausgestaltung sieht vor, daß der Haltefuß für die Anordnung des teleskopartig ausziehbaren Teils eine zylindrische oder kegelstumpfförmige Anfügung an der Unterseite aufweist, welche in eine Öffnung des Deckblechs einfügbar ist. Dadurch ist eine relativ exakte Positionierung auf dem Deckblech möglich. Selbstverständlich kann diese Anfügung gegenüber der Öffnung des Deckblechs auch ein Spiel aufweisen, um beispielsweise beim Aufbringen einer Reling, Toleranzen der Abstände der Haltefüße ausgleichen zu können.

Vorzugsweise wird an der Anschlagfläche des Haltefußes am Deckblech eine elastische Unterlage eingefügt, wodurch bei der Montage Lackbeschädigungen verhindert werden und nach der Montage eine dauerhafte Abdichtung gegen Eindringen von Wasser erzielt ist. In diesem Fall wird die Anpreßkraft des Haltefußes bei entsprechender Elastizität der Unterlage durch diese - neben der Elastizität des Federelements - mitbestimmt.

Zweckmäßigerweise wird das Federelement als Gummiring ausgebildet, der von einem Haltekopf am Bolzen gegen das Deckblech gedrückt wird. Dadurch ist das Federelement nicht nur einfach und preiswert sowie gut handhabbar, sondern sorgt auch noch zusätzlich dafür, daß an dieser Stelle kein Wasser eindringen kann. Der Haltekopf kann auf unterschiedliche Weise ausgebildet sein, beispielsweise kann es sich einfach um einen Haltekopf handeln, der das Federelement oben abdeckt oder es ist möglich, daß der Haltekopf aus einem Halterand des Bolzens und einer Unterlegscheibe besteht, wobei diese zweckmäßigerweise aus Plastik ist. Bei einer solchen Plastikunterlegscheibe kann der Gummiring dadurch auf dem Bolzen aufgebracht werden, daß die Plastikunterlegscheibe mittels elastischer Ausdehnung über den Haltekopf gestreift wird, um den zuvor aufgebrachten Gummiring fest mit dem Bolzen zu verbinden. Für diese Aufbringung der Plastikunterlegscheibe ist eine trapezartige Verjüngung des Haltekopfes nach oben zweckmäßig. Diesem Zweck könnte natürlich auch ein Haltekopf dienen, der als eine in den Bolzen eingefügte Schraube ausgebildet ist. Dann wird der Gummiring mittels Einschraubung der Schraube mit dem Bolzen verbunden. Ist der Schraubenkopf groß genug, kann auf die Unterlegscheibe verzichtet werden.

Die Erfindung wird nachfolgend anhand der Zeichnung dargestellt. Es zeigen
- **Fig. 1**: eine Gesamtansicht eines erfindungsgemäßen Ausführungsbeispiels im Schnitt,
- **Fig. 2**: einige Einzelteile dieses Ausführungsbeispiels,
- **Fig. 3**: eine Einzelheit des Haltefußes,
- **Fig. 4**: eine alternative Ausgestaltung des Bolzens und
- **Fig. 5**: eine alternative Ausgestaltung von Klemmvorrichtung und Bolzen.

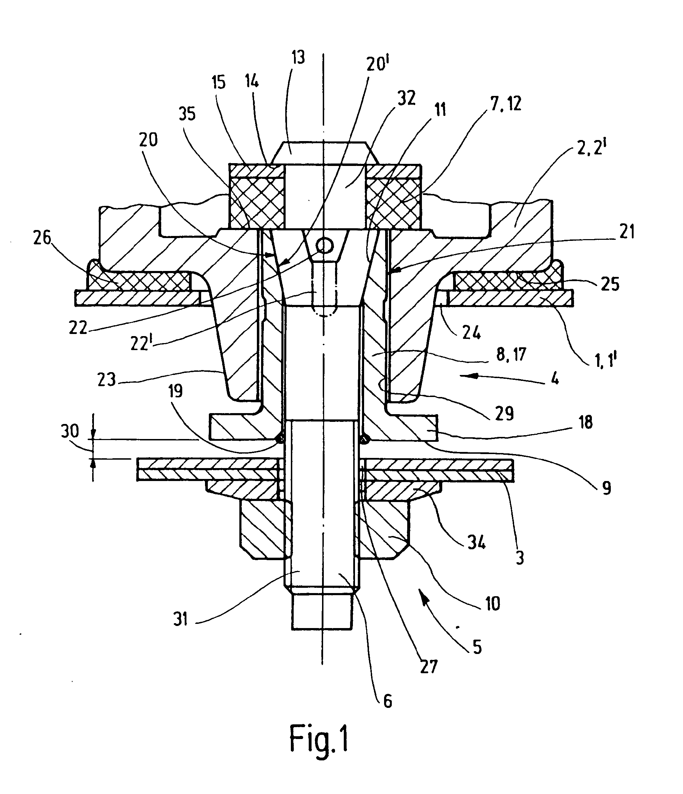

**Fig. 1** zeigt eine Gesamtansicht eines erfindungsgemäßen Ausführungsbeispiels im Schnitt. Bei der Erfindung geht es um die Anordnung eines Haltefußes 2, von dem hier nur der untere Teil gezeichnet ist, auf einem Deckblech 1. Beispielsweise kann es sich um die Anordnung eines Relingfußes 2' auf einem Kraftfahrzeugdach 1' handeln. Selbstverständlich könnten in ähnlicher Weise derartige Haltefüße 2 auch im Kofferraumbereich eines PKW, an Wohnwägen oder Wohnmobilen oder bei Booten Anwendung finden. Wesentlich ist dabei, daß das Deckblech 1 nur für bedingte Belastungen geschaffen ist und sich unter diesem Deckblech 1 eine Tragstruktur 3 befindet, die das Deckblech 1 an verschiedenen Stellen abstützt, ansonsten jedoch einen gewissen Abstand zum Deckblech 1 aufweist. Um einen Haltefuß 2, welcher oft nicht unerheblichen Kräften ausgesetzt ist, einen sicheren Halt zu geben, ist es erforderlich, daß der Haltefuß 2 fest mit der Tragstruktur 3 verbunden ist, damit die auf den Haltefuß 2 wirkenden Kräfte im wesentlichen von dieser Tragstruktur 3 aufgenommen werden.

Zu diesem Zweck sieht die Erfindung vor, daß der Haltefuß 2 mit einem Höhenausgleichselement 4 und einem Befestigungsmittel 5 ausgestattet ist, die der Verbindung des Haltefußes 2 mit der Tragstruktur 3 dienen. Der Auflage des Haltefußes 2 auf dem Deckblech 1 dient im wesentlichen ein Federelement 7, das dafür sorgt, daß Anpreßkräfte zwar eine gute Auflage garantieren, jedoch derart limitiert sind, daß es zu keiner Verformung des Deckblechs 1 kommen kann.

Im einzelnen besteht die Erfindung aus einer zylindrischen oder kegelstumpfförmigen Anfügung 23 am Haltefuß 2, welche eine als Durchgangsloch ausgebildete Bohrung 29 aufweist, in die als teleskopartig ausziehbares Teil 8 eine Buchse 17 eingefügt ist. Diese Buchse 17 enthält wiederum einen Bolzen 6, welcher ein Gewinde 31 zur Befestigung an der Tragstruktur 3 mittels einer Mutter 10 aufweist. Zwischen der Buchse 17 und dem Bolzen 6 ist eine keilartige Klemmvorrichtung 11 vorgesehen, welche aus einem konusartigen Abschnitt 20 des Bolzens 6 und einem damit korrespondierenden Abschnitt 20' der Buchse 17 gebildet ist. Am oberen Ende des Bolzens 6 befindet sich ein Haltekopf 13, welcher mittels eines Halterandes 14 auf einer Aufnahme 32 ein Federelement 7 hält. Dieses ist als Gummiring 12 ausgebildet, welcher über den Haltekopf 13 geschoben ist und danach mittels einer Unterlegscheibe 15 aus Plastik gehalten wird, welche durch die trapezartige Ausbildung des Haltekopfes 13 ebenfalls über diesen unter elastischer Aufweitung hinwegschiebbar ist.

Weitere Einzelheiten, sowie die Montage und die Funktion werden nachfolgend anhand der **Fig. 1****,** **2** **und** **3** erläutert. Wie bereits ausgeführt, wird als erstes der Bolzen 6 mit dem Federelement 7 verbunden, indem der Gummiring 12 und die Unterlegscheibe 15 am Haltekopf 13 befestigt werden. Danach wird der Bolzen 6 von oben in die Bohrung 29 des Haltefußes 2 eingeschoben und die Buchse 17 von unten. Danach wird die Buchse 17 mittels eines elastischen Halterings 19 gesichert. Der Haltefuß 2 wird noch mit einer elastischen Unterlage 26 versehen, damit die Anlagefläche 25 des Haltefußes 2 nicht unmittelbar auf dem Deckblech 1 aufliegt und damit diese Auflage gegen das Eindringen von Wasser abgedichtet ist. Nunmehr wird der Haltefuß 2 in die Öffnung 24 des Deckblechs 1 eingefügt, wobei der Bolzen 6 mit seinem Gewinde 31 durch eine Bohrung 27 an der Tragstruktur 3 hindurchgreift. Jetzt wird über das Gewinde 31 des Bolzens 6 eine Unterlegscheibe 34 geschoben und die Mutter 10 aufgeschraubt.

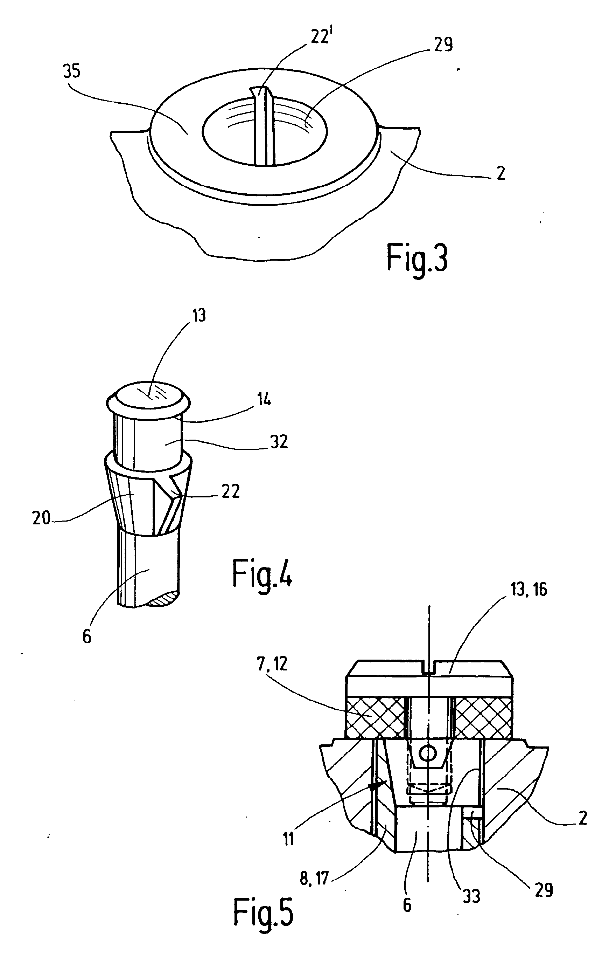

Damit sich beim Anziehen der Mutter 10 der Bolzen 6 nicht drehen kann, ist eine Verdrehsicherung 22, 22' angebracht. Diese kann beispielsweise derart ausgebildet sein, daß sie einen vom Bolzen 6 abstehenden Stift 22 oder eine Nase 22 aufweist, welche durch einen Schlitz 28 der Buchse 17 hindurchgreift und in eine Nut 22' des Haltefußes 2 eingreift. Dabei zeigt die **Fig. 2**, wie der Bolzen 6 mit dem Stift 22 in die Buchse 17 einfügbar ist und die **Fig. 3** zeigt einen Ausschnitt aus dem Haltefuß 2 mit der Auflagefläche 35 für den Gummiring 12, der Bohrung 29 sowie der Nut 22', in die der Stift 22 eingreift.

Durch diese Verdrehsicherung 22, 22' läßt sich somit die Mutter 10 ohne weiteres anziehen, wobei durch die konusartigen Abschnitte 20, 20' von Bolzen 6 und Buchse 17 als erstes die Buchse 17 nach unten gezogen wird, um den Abstand 30 zur Tragstruktur 3 zu überwinden. Je nach dem, welche Toleranz der Abstand zwischen Deckblech 1 und Tragstruktur 3 aufweist, kann dieser Abstand 30 zwischen ca. 1, 5 und 4,5 mm betragen. Bei dem vorgenannten Anziehen der Mutter 10 kommt es schon zu einem gewissen Zusammenpressen des Federelements 7, wobei dieser Kompressionsweg von der Lage des tatsächlichen Abstandsmaßes zwischen Tragstruktur 3 und Deckblech 2 innerhalb der Toleranz abhängig ist. Somit ist auch die erzielte Kompressionskraft von diesem Maß abhängig, was bedeutet, daß die Anpreßkrafttoleranz und die Maßtoleranz des Abstandes zwischen Deckblech 1 und Tragstruktur 3 - der Bereich der Maßtoleranz entspricht dem maximal auftretenden Abstand 30 - aufeinander abgestimmt sein müssen.

Wenn die Buchse 17 mit ihrer Anschlagfläche 9, die sich an einem Bund 18 der Buchse 17 befindet, an der Tragstruktur 3 anschlägt, führt jedes weitere Anziehen der Mutter 10 dazu, daß sich die konusartigen Abschnitte 20 und 20' gegenseitig verschieben. Da die Buchse 17, wie aus **Fig. 2** ersichtlich ist, mindestens einen, vorzugsweise jedoch mehrere Schlitze 28 aufweist, wird der Abschnitt der Buchse 17, der außen eine haltgebende Oberflächenstruktur 21, beispielsweise eine Rändelung, aufweist, unter Aufweitung nach außen gegen die Wandung der Bohrung 29 des Haltefußes 2 gedrückt bis die Buchse 17 und damit auch der Bolzen 6 fest mit dem Haltefuß 2 verklemmt sind.

Damit ist das Höhenausgleichselement 4 entsprechend des Maßes zwischen Deckblech 1 und Tragstruktur 3 an der entsprechenden Einsatzstelle exakt eingestellt und jedes weitere Anziehen der Mutter 10 kann die Anpreßkraft zwischen Haltefuß 2 und Deckblech 1 nicht mehr erhöhen. Dadurch wird eine Verformung des Deckblechs 1 ausgeschlossen. Das weitere Anziehen der Mutter 10 bewirkt dann nur noch eine Einpressung der Tragstruktur 3 zwischen Mutter 10 und Anschlagfläche 9.

Die kräftemäßige Belastung des Deckblechs 1 entspricht somit der Kompression des Federelements 7, also hier des Gummirings 12, welcher durch das Anziehen der Mutter 10 bis zur Verklemmung von Buchse 17 und Haltefuß 2 vorgespannt wird. Diese Kompression entspricht dem Abstand 30 und zusätzlich dem Weg des Bolzens 6 vom Auftreffen der Anschlagfläche 9 bis zur Verklemmung der Buchse 17 in der Bohrung 29 des Haltefußes 2. Der letztgenannte Weg kann durch die Keilwinkel exakt vorgegeben werden, er bestimmt die Mindestkompression des Federelements 7 und damit die Mindestanpreßkraft des Haltefußes 2 auf dem Deckblech 1.

Die Anpreßkraft läßt sich durch folgendes vorbestimmen:

Zum einen dadurch, daß der Gummiring 12 eine Dicke aufweist, die entsprechend über dem maximal möglichen Gesamtkompressionsweg liegt. Die Kompressionskraft, die aufgebracht werden muß, um das Federelement 7 zu komprimieren und die als Anpreßkraft mittels der Elastizität des Federelements 7 gespeichert wird, wird durch die Wahl der Federkennlinie bestimmt. Diese wir durch die Auswahl der Shore-Härte des Gummiringes bestimmt.

Weiterhin ist für die gespeicherte Anpreßkraft der Kompressionsweg maßgeblich. Dieser setzt sich zusammen aus dem Abstand 30, der innerhalb des Toleranzbereichs für den Abstand zwischen Tragstruktur 3 und Deckblech 2. variieren kann. Entsprechend ist auch ein Toleranzbereich der möglichen Anpreßkraft vorgesehen. Weiterhin kommt der Weg hinzu, den die Buchse 17 nach ihrem Auftreffen auf die Tragstruktur 3 bis zur Verklemmung mit dem Haltefuß 2 zurücklegt. Dieser Weg läßt sich durch die keilartige Klemmvorrichtung 11, vor allem durch den Keilwinkel vorbestimmen. Daher ermöglicht dieser Keilwinkel - hier als Konizität ausgebildet - eine exakte Bestimmung der Mindestkompression des Federelements 7 und damit eine exakte Bestimmung der Mindestanpreßkraft des Haltefußes 2 aus das Deckblech 1. Der insgesamt zurückgelegte Weg ist dann das Maß der Verformung, die der Gummiring 12 nach der endgültigen Befestigung der erfindungsgemäßen Befestigungsvorrichtung erhält.

Die **Fig. 4** zeigt noch eine alternative Ausgestaltung des Bolzens 4, wobei hier statt dem Stift eine Nase 22 vorgesehen ist, welche als Verdrehsicherung 20, 20' in die Nut 22' eingreift.

**Fig. 5** zeigt, daß es auch noch alternative Ausgestaltungsmöglichkeiten für eine keilartige Klemmvorrichtung 11 gibt. Hier sind die beiden keilartigen Flächen am Bolzen 6 und dazu korrespondierend an der Buchse 17 nur an einer Seite vorgesehen und an der anderen Seite durchgreift eine Klemmbacke 33 eine entsprechende Aussparung an der Buchse 17, so daß diese Klemmbacke 33 unmittelbar an die Wandung der Bohrung 29 des Haltefußes 2 gepreßt wird, und auf diese Weise die Buchse 17 im Bereich der Klemmvorrichtung 11, also gegenüberliegend zur Klemmbacke 33, ebenfalls gegen die Bohrung 29 gepreßt wird. Als weitere Alternative ist hier gezeigt, daß der Haltekopf 13 auch als eine Schraube 16 ausgebildet werden kann. Bei entsprechend großer Ausgestaltung des Schraubenkopfes bedarf es dann keiner Unterlegscheibe mehr, um den Gummiring 12 zu halten.

Die vorliegenden Darstellungen deuten die Möglichkeiten verschiedenartiger Ausgestaltungen der Befestigungsvorrichtung nur an. Auch weitere alternative Ausgestaltungen sind selbstverständlich denkbar, wobei folgende Elemente wesentlich sind:

Das erste wesentliche Element der Erfindung ist, daß in den Haltefuß 2 ein ausziehbares Teil 8 eingefügt ist, um als Höhenausgleichselement 4 zu dienen, wobei dieses Höhenausgleichselement 4 mittels einer Klemmvorrichtung 11 in der richtigen Höhe verklemmt wird und danach die Mutter 10 und der Bolzen 6 nur noch zur Bewirkung des Kraftschlusses mit der Tagstruktur 3 dienen.

Das zweite wesentliche Element der Erfindung ist die Anordnung des Federelements 7 zwischen einem Haltekopf 13 am Ende des Bolzens 6 und einer Anschlagfläche 35 am Haltefuß 2. Dieses Federelement 7 dient der Gewährleistung der erforderlichen Anpreßkraft des Haltefußes 2 auf dem Deckblech 1, welche ausschließlich durch das Anziehen der Mutter 10 bewirkt wird. Dazu ist es am zweckmäßigsten, wenn die Bohrung 29 des Haltefußes 2 als Durchgangsbohrung ausgebildet ist. Selbstverständlich wäre natürlich statt der Bohrung 29 auch eine U-förmige Nut denkbar, unter der Voraussetzung, daß sie derart angeordnet ist, daß sie ebenfalls eine Auflagefläche 35 für das Federelement 7 bietet.

Der Vorteil der Erfindung besteht dabei darin, daß außer dem Einstecken der Befestigungsvorrichtung in die dafür vorgesehene Öffnung 24 nur noch die Mutter 10 angezogen werden muß, was dann von selbst zur Kompression des Federelements 7 zur Bewirkung einer Anpreßkraft des Haltefußes 2 auf dem Deckblech 1 innerhalb der vorgegebenen Toleranz führt. Weiterhin bewirkt das Anziehen der Mutter 10 gleichzeitig die Justierung der Höheneinstellung und das nachfolgende Festlegen an der Tragstruktur 3.

### Befestigungsvorrichtung

### Bezugszeichenliste

- 1: Deckblech
- 1': Kraftfahrzeugdach
- 2: Haltefuß
- 2': Relingfuß
- 3: Tragstruktur
- 4: Höhenausgleichselement
- 5: Befestigungsmittel
- 6: Bolzen
- 7: Federelement
- 8: ausziehbares Teil
- 9: Anschlagfläche
- 10: Mutter
- 11: keilartige Klemmvorrichtung
- 12: Gummiring
- 13: Haltekopf
- 14: Halterand
- 15: Unterlegscheibe
- 16: Schraube
- 17: Buchse
- 18: Bund
- 19: elastischer Haltering
- 20: konusartiger Abschnitt am Bolzen
- 20': korrespondierender Abschnitt an der Buchse
- 21: haltgebende Oberflächenstruktur (z. B. Rändelung)
- 22, 22': Verdrehsicherung
- 22: Stift oder Nase
- 22': Nut
- 23: zylindrische oder kegelstumpfförmige Anfügung am Haltefuß
- 24: Öffnung des Deckblechs
- 25: Anlagefläche am Deckblech
- 26: elastische Unterlage
- 27: Bohrung in der Tragstruktur
- 28: Schlitze
- 29: Bohrung des Haltefußes
- 30: Abstand
- 31: Gewinde für Mutter
- 32: Aufnahme für Gummiring
- 33: Klemmbacke
- 34: Unterlegscheibe
- 35: Auflage für Gummiring

## Patentansprüche

1. Befestigungsvorrichtung bestehend aus Befestigungsmittel (5) und Höhenausgleichselement (4) sowie einem auf einem Deckblech (1) angeordneten Haltefuß (2) mit einer Abstützung auf einer unter dem Deckblech (1) liegenden Tragstruktur (3), insbesondere für die Befestigung eines Relingfußes (2') auf einem Kraftfahrzeugdach (1'), wobei mittels des Höhenausgleichselements (4) Abstandstoleranzen zwischen Deckblech (1) und Tragstruktur (3) berücksichtigbar sind und das Befestigungsmittel (5) derart ausgebildet ist, daß eine feste Verbindung mit der Tragstruktur (3) erzielbar ist, wobei das Befestigungsmittel (5) ein Bolzen (6) und das Höhenausgleichselement (4) ein im Haltefuß (2) gelagertes teleskopartig ausziehbares Teil (8) mit einer Anschlagsfläche (9) ist, wobei der Bolzen (6) durch Anziehen einer Mutter (10) das ausziehbare Teil (8) mit seiner Anschlagfläche (9) gegen die Tragstruktur (3) zieht und nach deren Auftreffen mittels einer keilartigen Klemmvorrichtung (11) das ausziehbare Teil (8) im Haltefuß (2) verklemmt, so daß das weitere Anziehen der Mutter (10) eine Befestigung an der Tragstruktur (3) bewirkt,
**dadurch gekennzeichnet,**
**daß** zwischen einem Haltekopf (13) mit einem Halterand (14) am Ende des Bolzens (6) und einer Auflagefläche (35) am Haltefuß (2) ein Federelement (7) angeordnet ist, das durch das Anziehen der Mutter (10) bis zur Verklemmung des ausziehbaren Teils (8) im Haltefuß (2) vorgespannt wird, um den Haltefuß (2) mit begrenzter Anpreßkraft gegen das Deckblech (1) zu drücken, wobei das Federelement (7) eine Dicke aufweist, die über dem maximal möglichen Gesamtkompressionsweg des Federelements (7) liegt und sich dieser Gesamtkompressionsweg aus dem Weg zusammensetzt, den das teleskopartig ausziehbare Teil (8) vor dem Auftreffen der Anschlagfläche (9) zurücklegen muß, zusammen mit dem Weg vom Auftreffen der Anschlagfläche (9) bis die Klemmvorrichtung (11) Halt findet, wobei das Federelement (7) und der Gesamtkompressionsweg so ausgelegt sind, daß durch das Anziehen der Mutter (10) das Federelement (7) ein begrenzte Anpreßkraft des Haltefußes (2) auf dem Deckblech (1) ausübt, die innerhalb einer vorgegebenen Toleranz liegt, durch die das Deckblech (1) nicht verformt wird.

2. Befestigungsvorrichtung nach Anspruch 1,
**dadurch gekennzeichnet,**
**daß** die Anpreßkraft des Haltefußes (2) auf dem Deckblech (1) eine gute Auflage garantiert, jedoch derart limitiert ist, daß es zu keiner Verformung des Deckblechs (1) kommen kann, indem die Beschaffenheit des Federelements (7) sowie die Ausgestaltung der Klemmvorrichtung (11) entsprechend gewählt sind.

3. Befestigungsvorrichtung nach Anspruch 2,
**dadurch gekennzeichnet,**
**daß** zur Bestimmung der Anpreßkraft die Dicke und Federkennlinie des Federelements (7) sowie die Keilwinkel der keilartigen Klemmvorrichtung (11) dienen.

4. Befestigungsvorrichtung nach Anspruch 1, 2 oder 3,
**dadurch gekennzeichnet,**
**daß** das Federelement (7) ein Gummiring (12) ist.

5. Befestigungsvorrichtung nach einem der Ansprüche 1 bis 4,
**dadurch gekennzeichnet,**
**daß** das teleskopartig ausziehbare Teil (8) eine Buchse (17) mit einem die Anschlagfläche (9) bildenden Bund (18) ist.

6. Befestigungsvorrichtung nach Anspruch 5,
**dadurch gekennzeichnet,**
**daß** ein elastischer Haltering (19) auf dem Bolzen (6) angeordnet ist, um die Buchse (17) für die Montage unverlierbar zu halten.

7. Befestigungsvorrichtung nach einem der Ansprüche 1 bis 6,
**dadurch gekennzeichnet,**
**daß** die keilartige Klemmvorrichtung (11) ein konusartiger Abschnitt (20) am Bolzen (6) und ein korrespondierender Abschnitt (20') an der Buchse (17) ist, mit der Bolzen (6) und Buchse (17) in der Bohrung (29) des Haltefußes (2) festlegbar sind.

8. Befestigungsvorrichtung nach Anspruch 7,
**dadurch gekennzeichnet,**
**daß** der korrespondierende Abschnitt (20') der Buchse (17) mindestens einen, eine Aufspreizung zulassenden Schlitz (28) aufweist.

9. Befestigungsvorrichtung nach Anspruch 8,
**dadurch gekennzeichnet,**
**daß** die Buchse (17) im Umfangsbereich ihrer Aufspreizung und/oder der damit korrespondierende Abschnitt des Haltefußes (2) eine haltgebende Oberflächenstruktur (21) aufweist.

10. Befestigungsvorrichtung nach einem der Ansprüche 1 bis 9,
**dadurch gekennzeichnet,**
**daß** der Bolzen (6) gegenüber dem Haltefuß (2) eine Verdrehsicherung (22, 22') aufweist.

11. Befestigungsvorrichtung nach Anspruch 10,
**dadurch gekennzeichnet,**
**daß** die Verdrehsicherung (22, 22') als am Bolzen (6) angeordneter Stift oder angeordnete Nase (22) ausgebildet ist, der/die durch den Schlitz (28) der Buchse (17) hindurchgreifend in eine Nut (22) der Bohrung (29) des Haltefußes (2) eingreift.

12. Befestigungsvorrichtung nach einem der Ansprüche 1 bis 11,
**dadurch gekennzeichnet,**
**daß** der Haltefuß (2) für die Anordnung des teleskopartig ausziehbaren Teils (8) eine zylindrische oder kegelstumpfförmige Anfügung (23) an der Unterseite aufweist, welche in eine Öffnung (24) des Deckblechs (1) einfügbar ist.

13. Befestigungsvorrichtung nach einem der Ansprüche 1 bis 12,
**dadurch gekennzeichnet,**
**daß** an der Anlagefläche (25) des Haltefußes (2) zum Deckblech (1) eine elastische Unterlage (26) eingefügt ist.

14. Befestigungsvorrichtung nach einem der Ansprüche 1 bis 13,
**dadurch gekennzeichnet,**
**daß** der Haltekopf (13) aus einem Halterand (14) des Bolzens (6) und einer Unterlegscheibe (15) besteht.

15. Befestigungsvorrichtung nach Anspruch 14,
**dadurch gekennzeichnet,**
**daß** die Unterlegscheibe (15) aus Plastik ist.

16. Befestigungsvorrichtung nach Anspruch 1 bis 13,
**dadurch gekennzeichnet,**
**daß** der Haltekopf (13) eine in den Bolzen (6) eingefügte Schraube (16) ist.

## Claims

1. An attachment device consisting of fastening means (5) and a height compensator (4) and also a retainer base (2) disposed on a cover plate (1) and provided with a support on a supporting structure (3) located underneath the cover plate (1), particularly for attachment of a roof rail (2') to an automobile roof (1'), in which spacing tolerances between said cover plate (1) and said supporting structure (3) can be compensated by means of said height compensator (4), said fastening means (5) being designed such that firm attachment thereof to said supporting structure (3) can be achieved, said fastening means (5) being a bolt (6) and said height compensator (4) being a telescopically extractable part (8) mounted in said retainer base (2) and provided with a stop limit surface (9), in which the tightening of a nut (10) causes the bolt (6) to pull the telescopically extractable part (8) with its stop limit surface (9) toward said supporting structure (3) and, following impingement thereof thereon, causes said telescopically extractable part (8) to be locked by means of a wedge-type clamping device (11) in said retainer base (2) so that further tightening of said nut (10) effects attachment to said supporting structure (3),
**characterized in that**
between a retainer head (13) having a retainer edge (14) at the end of said bolt (6) and a bearing face (35) on said retainer base (2) there is disposed a resilient element (7) which is biased by tightening said nut (10) until said telescopically extractable part (8) is locked in said retainer base (2), in order to press said retainer base (2) against said cover plate (1) under a restricted pressing force, and the resilient element (7) has a thickness which exceeds the maximum possible total compression path of said resilient element (7), said total compression path being made up of the path through which said telescopically extractable part (8) must travel before said stop limit surface (9) impinges plus the path traveled from the point of impingement of said stop limit surface (9) to the point at which said clamping device (11) finds a hold, and the resilient element (7) and the total compression path are such that tightening of said nut (10) causes the resilient element (7) to exert a restricted pressing force through said base retainer (2) on the cover plate (1), said force being within a specified tolerance range which prevents deformation of said cover plate (1).

2. The attachment device as defined in claim 1,
**characterized in that**
the pressing force of said retainer base (2) on said cover plate (1) ensures good contact but is restricted such that no deformation of said cover plate (1) can occur on account of the properties of said resilient element (7) and the design of said clamping device (11) being selected appropriately.

3. The attachment device as defined in claim 2,
**characterized in that**
the pressing force is determined by the thickness and characteristic curve of resilience of said resilient element (7) and by the wedge angle of the wedge-type clamping device (11).

4. The attachment device as defined in claim 1, claim 2, or claim 3,
**characterized in that**
said resilient element (7) is a rubber ring (12).

5. The attachment device as defined in any one of claims 1 to 4,
**characterized in that**
said telescopically extractable part (8) is a bush (17) having a collar (18) forming said stop limit surface (9).

6. The attachment device as defined in claim 5,
**characterized in that**
a resilient retaining ring (19) is disposed on said bolt (6), in order to keep the bush (17) captive for installation purposes.

7. The attachment device as defined in any one of claims 1 to 6,
**characterized in that**
said wedge-type clamping device (11) consists of a cone-shaped region (20) of said bolt (6) and a conjugate region (20') on said bush (17), by means of which said bolt (6) and bush (17) can be locked in said bore (29) of said retainer base (2).

8. The attachment device as defined in claim 7,
**characterized in that**
said conjugate region (20') of said bush (17) has at least one expandable slit (28).

9. The attachment device as defined in claim 8,
**characterized in that**
said bush (17) has a gripping surface texture (21) the periphery of its region of spread and/or on the conjugate region of said retainer base (2).

10. The attachment device as defined in any one of claims 1 to 9,
**characterized in that**
said bolt (6) has an anti-twist element (22, 22') relative to said retainer base (2).

11. The attachment device as defined in claim 10,
**characterized in that**
said anti-twist element (22, 22') is designed as a pin or lug (22) disposed on said bolt (6) and adapted to pass through said slit (28) of said bush (17) to engage a groove (22) in the bore (29) of said retainer base (2).

12. The attachment device as defined in any one of claims 1 to 11,
**characterized in that**
said retainer base (2) has a cylindrical or truncated cone-shaped appendage (23) on its underside for orientation of said telescopically extractable part (8), which appendage can be inserted into an opening (24) in said cover plate (1).

13. The attachment device as defined in any one of claims 1 to 12,
**characterized in that**
a resilient support (26) is added/incorporated to said bearing surface (25) of said retainer base (2) to said cover plate (1).

14. The attachment device as defined in any one of claims 1 to 13,
**characterized in that**
said retainer head (13) consists of a retainer edge (14) of said bolt (6) and a washer (15).

15. The attachment device as defined in claim 14,
**characterized in that**
said washer (15) is made of plastics material.

16. The attachment device as defined in any one of claims 1 to 13,
**characterized in that**
said retainer head (13) is a screw (16) inserted in said bolt (6).

## Revendications

1. Dispositif de fixation se composant de moyens de fixation (5) et d'éléments de compensation en hauteur (4) ainsi qu'un pied de maintien (2) disposé sur une tôle de toit (1) avec un appui sur une structure porteuse (3) se trouvant sous la tôle de toit (1) en particulier pour la fixation d'un pied de batayole (2') sur un toit de véhicule (1'), au moyen de l'élément de compensation de hauteur (4) des tolérances d'écart entre la tôle de toit (1) et la structure porteuse (3) pouvant être prises en compte et le moyen de fixation (5) étant réalisé de sorte qu'une connexion peut être obtenue avec la structure porteuse (3), le moyen de fixation (5) étant un boulon (6) et l'élément de compensation de hauteur (4) étant une pièce (8) extractible télescopiquement logée dans le pied de maintien (2) et muinie d'une surfrace de butée (9), le boulon (6) tirant par serrage d'un écrou (10) la pièce extractible (8) par sa surface de butée (9) contre la structure porteuse (3) et serrant la pièce extractible (8) dans le pied de maintien (2) après leur application réciproque au moyen d'un dispositif de serrage (11) formant cale de sorte que la poursuite du serrage de l'écrou (10) provoque une fixation sur la structure porteuse (3),
**caractérisé en ce**
**qu'**entre une tête de maintien (13) avec un bord de maintien (14) sur l'extrémité du boulon (6) et une surface d'application (35) est disposé sur le pied de maintien (2) un élément de ressort (7) qui est précontraint par serrage de l'écrou (10) jusqu'au coincement de la pièce extractible (8) dans le pied de maintien (2) pour comprimer le pied de maintien (2) contre la tôle de toit (1) par application d'une force de compression limitée, l'élément de ressort (7) présentant une épaisseur qui est supérieure au trajet total de compression maximal possible de l'élément de ressort (7) et ce trajet de compression total se composant du trajet que doit parcourir la pièce télescopique extractible (8) avant son impact sur la surface de butée (9) jusqu'à ce que le maintien du dispositif de serrage (11) soit suffisamment assuré par le trajet de la surface de butée (9), l'élément de ressort (7) et le trajet total de compression étant réalisé de sorte que par le serrage de l'écrou (10), l'élément de ressort (7) exerce une force de compression limitée du pied de maintien (2) sur la tôle de toit (1), qui se trouve dans une tolérance prédéterminée ne déformant pas la tôle de toit (1).

2. Dispositif de fixation selon la revendication, **caractérisé en ce que** la force de compression du pied de maintien (2) garantit une bonne application sur la tôle de toit (1) mais tout étant limitée de manière à ne provoquer aucune déformation de la tôle de toit (1) dans le fait que la conception de l'élément de ressort (7) ainsi que la configuration du dispositif de serrage (11) sont choisies en conséquence.

3. Dispositif de fixation selon la revendication 2, **caractérisé en ce que** l'épaisseur et la caractéristique de l'élément de ressort (7) ainsi que l'angle de calage du dispositif de serrage formant cale (11) servent à la détermination de la force de compression,.

4. Dispositif de fixation selon les revendications 1, 2 ou 3 **caractérisé en ce que** l'élément de ressort (7) est une bague en caoutchouc (12).

5. Dispositif de fixations selon l'une des revendications 1 à 4, **caractérisé en ce que** la pièce extractible télescopique (8) est une douille (17) avec un collet (18) formant la surface de butée (9).

6. Dispositif de fixation selon la revendication 5, **caractérisé en ce qu'**une bague élastique de retenue (19) est disposéee sur le boulon (6) pour maintenir la douille (17) au moment du montage.

7. Dispositif de fixation selon l'une des revendications 1 à 6, **caractérisé en ce que** le dispositif de serrage (11) formant cale est une section en forme de cône (20) sur le boulon (6) et une section correspondante (20') sur la douille (17) qui permet de fixer le boulon (6) et la douille (17) dans l'alésage (29) du pied de maintien (2).

8. Dispositif de fixation selon la revendication 7, **caractérisé en ce que** la section correspondante (20') de la douille (17) présente au moins une fente (28) permettant un écartement.

9. Dispositif de fixation selon la revendication 8, **caractérisé en ce que** la douille (17) présente dans la zone périphérique de son écartement et/ou de la section correspondante du pied de maintien (2) une structure de surface (21) donnant du maintien.

10. Dispositif de fixation selon l'une des revendications 1 à 9, **caractérisé en ce que** le boulon (6) présente par rapport au pied de maintien (2) un blocage en rotation (22, 22').

11. Dispositif de fixation selon la revendication 10, **caractérisé en ce que** le blocage en rotation (22, 22') est réalisé comme une broche ou un ergot disposé sur le boulon (6) qui s'engage dans une rainure (22) de l'alésage (29) du pied de maintien (2) en passant par la fente (28) de la douille (17).

12. Dispositif de fixation selon l'une des revendications 1 à 11, **caractérisé en ce que** le pied de maintien (2) présente pour la disposition de la pièce télescopique extractible (8) une insertion cylindrique ou tronconique (23) sur la face inférieure, laquelle est insérable dans une ouverture (24) de la tôle de toit (1).

13. Dispositif de fixation selon l'une des revendications 1 á 12, **caractérisé en ce que** sur la surface d'application (25) du pied de maintien (2), une cale élastique (26) est ajoutée à la tôle de toit (1).

14. Dispositif de fixation selon l'une des revendications 1 à 13, **caractérisé en ce que** la tête de retenue (13) se compose d'un bord de retenue (14) du boulon (6) et d'une rondelle (15).

15. Dispositif de fixation selon la revendication 14, **caractérisé en ce que** la rondelle (15) est en plastique.

16. Dispositif de fixation selon l'une des revendications 1 à 13, **caractérisé en ce que** la tête de retenue (13) est une vis (16) introduite dans le boulon (6).
